# EUROPEAN PATENT APPLICATION

(11) **EP 2 750 090 A1**
(43) Date of publication of application: **02.07.2014**
(21) Application number: 12306685.4
(22) Date of filing: 27.12.2012
(51) Int. Cl.: G06Q 20/12

(54) **Method to offer a payment menu to a user**

(71) Applicant: Orange, 75015 Paris (FR)
(72) Inventor: El-Etr, El-Ibrahim, New Cairo - Cairo (EG); Soliman, Ghada, Nasr City - Cairo (EG)

(57) **Abstract**

The present system relates to a method to enable payment on a merchant website for a user, the user being associated to user payment information, the method being carried out by an electronic device and comprising the acts of rendering a webpage comprising one or more graphical elements, each graphical element representing an item for sale and being associated to a payment menu and a preset user input, presenting the payment menu upon detecting the preset user input on the one or more graphical element associated to an item for sale, receiving selection from the user on the payment menu, processing payment of the item associated to the graphical element based on the selection and using the user payment information.

## Description

### FIELD OF THE PRESENT SYSTEM:

The present invention generally relates to electronic devices, and more specifically to graphical user interfaces for such electronic devices.

### BACKGROUND OF THE PRESENT SYSTEM:

Today users can purchase online different goods through merchant websites such as Amazon.com, Ebay.com and the likes. The websites seek to facilitate the payment process by the user. Document US 5, 960,411 from Amazon describes a payment shortcut to all the user through just "one-click" of a mouse to complete a transaction after selection of product to buy.

In order to activate such a one click feature, the user needs to access the product webpage, and a "one-click" icon will be displayed next to the product. When the user is performing a search for products, such merchant websites will provide a list of hits matching the search criteria provided by the user. From that list, if the user sees a product he is interested in, he will still need to access the page corresponding to a product selected in the list, and then activate the one click payment.

Taking into account the search for a product, the payment will consist actually of at least two clicks from the user and a page access. The experience may not appear as fluid to the user, especially if the electronic device he used to search the merchant website is a mobile device with slower processing capacities or limited connectivity.

Therefore, there is a need today for improving the user's experience when buying products online. There is a further need for a graphical user interface that limits further the user's interaction to order goods.

### SUMMARY OF THE PRESENT SYSTEM:

It is an object of the present system to overcome disadvantages and/or make improvements in the prior art.

The present system relates to a method to enable payment on a merchant website for a user, the user being associated to user payment information, the method being carried out by an electronic device and comprising the acts of rendering a webpage comprising one or more graphical elements, each graphical element representing an item for sale and being associated to a payment menu and a preset user input, presenting the payment menu upon detecting the preset user input on the one or more graphical element associated to an item for sale, receiving selection from the user on the payment menu, processing payment of the item associated to the graphical element based on the selection and using the user payment information.

Such method advantageously allows a user to proceed with a purchase on a merchant website easily, limiting the number of user interaction or the necessity to browse through different webpages. This is particularly advantageous as it facilitates the payment by reducing the number of user interactions needed to proceed with a payment, but also because it limits the necessity of browsing through different webpages. Indeed, electronic devices do have a propensity to connect to Internet using wireless connections such as 3G connection. Such Internet connections may sometimes be billed according to the data transferred, the proposed method thus will reduced user bill. Such Internet connections are also not as reliable as a wireline connection or a connection through a home gateway connected to the network via aDSL or optical fiber. Thus, the proposed method, by reducing the necessity of browsing through different webpages, will improve the user experience by reducing annoying steps of waiting for the loading of webpages.

In a complementary embodiment of present system, the preset user input is a right click using a pointing device.

The pointing device is typically a mouse or a touchpad. Thus, the present method limits the user interaction to one right click, either on a mouse or a touchpad. Thus, the present method can be implemented easily and be integrated smoothly in existing interfaces, as a right click option is an easily accessible option for users of an electronic device with a mouse connected or a touchpad.

In one embodiment of present system, the rendered webpage uses a markup language for associating the payment menu and the preset user input to one or more graphical elements of said webpage.

Such embodiment of the present method presents the advantage of being compatible with almost all browsers on the market. Also, by embedding the present method within the coding of the webpage, particularly the step of associating a graphical object representing an item for sale to a payment menu, the user does not need to previously install any other specific application. This is particularly advantageous as to make the present method accessible to almost any user on any electronic devices.

In another embodiment of present system, the rendered webpage is part of a web application. Such web application technology could be for example a language such as JavaScript or JQuery™. The browser rendering the webpage downloads a web application that can be seen as a specifically coded webpage. This web application is then interpreted or executed by the browser as to render a webpage. It typically allows webpages with more features.

Such embodiment of the present method also presents the advantage of being compatible with almost all browsers on the market. Also, by embedding the present method within the coding of the webpage, using a web application, the user does not need to previously install any other specific application. Web application, such as a Rich Internet Application (RIA), may necessitate sometimes that the user previously download and install a plug-in, such as Adobe™ Flash player or Java™ Runtime Environment for example, but these plug-in are nowadays commonly used most web browser. Using web application may allow implementing more options or features than using a markup language, depending on the features the Rich Internet Application used. This is also particularly advantageous as to make the present method accessible to almost any user on any electronic devices, as web applications are quite common.

In a further embodiment of present system, the method further comprises after the act of receiving the selection an act of retrieving data related to the item for sale represented by the graphical element that received the preset user input; the act of processing the payment further comprises an act of processing the payment of the item using the retrieved data.

In another complementary embodiment of present system, the act of presenting the payment menu further comprises an act of presenting the payment menu based on the user payment information.

Advantageously, the payment menu can be tuned according to the user payment information. Thus, for example, option can be given to the user as to where the item should be delivered. Various addresses associated to the user may be stored along the user payment information, and the menu may give the user, using for example a scrollable list, the choice among the various addresses for delivering the purchased item. In another example, it could be different credit card information, or any other information stored within the user payment information.

In a complementary embodiment of present system, the method further comprises preliminary acts of parsing the webpage to retrieve graphical elements associated to items for sale and of associating a payment menu and a preset user input to the retrieved graphical elements.

Advantageously, the present system may be implemented by parsing the rendered webpage and associating the payment menu to retrieved graphical object associated to items for sale. Such alternative embodiment of present system allows the method to be used on a merchant website that did not implement the present method. A plug-in may be for example downloaded and installed by the user on the electronic device, plug-in that could parse a merchant webpage and provide the advantageous functionalities of the method to the rendered webpage even if the merchant webpage did not implement the present system using another embodiment of present system. This complementary embodiment would allow the method to be used on a merchant website that is not implementing the present method, thus bringing new functionalities to the user, improving the user experience by facilitating the payment process.

The present invention comprises an electronic device with a user interface. The electronic device comprising a processor arranged to render a webpage comprising one or more graphical elements, each graphical element representing an item for sale and being associated to a payment menu and a preset user input, present the payment menu upon detecting the preset user input on the one or more graphical element associated to an item for sale, receive selection from the user on the payment menu, process payment of the item associated to the graphical element based on the selection and using the user payment information.

Finally, one object of the invention concerns a computer program, in particular computer programs on or in an information medium or memory, suitable for implementing the method for providing a visual feedback to the pairing of electronic devices object of the invention. These programs can use any programming language, and be in the form of source code, binary code, or of code intermediate between source code and object code such as in a partially compiled form, or in any other desirable form for implementing the methods according to the invention.

The information medium may be any entity or device capable of storing the program. For example, the medium can comprise a storage means, such as a ROM, for example a CD ROM or a microelectronic circuit ROM, or else a magnetic recording means, for example a diskette (floppy disk) or a hard disk.

### BRIEF DESCRIPTION OF THE DRAWINGS:

The invention is explained in further detail, and by way of example, with reference to the accompanying drawings wherein:
   FIG. 1 shows an electronic device in accordance with an embodiment of the present system;
   FIG. 2 shows an exemplary flowchart in accordance with an embodiment of the present system, and;
   FIG. 3 and 4 show illustrations of an embodiment of the present system.

### DETAILED DESCRIPTION OF THE PRESENT SYSTEM:

The following are descriptions of illustrative embodiments that when taken in conjunction with the following drawings will demonstrate the above noted features and advantages, as well as further ones. In the following description, for purposes of explanation rather than limitation, illustrative details are set forth such as architecture, interfaces, techniques, element attributes, etc. However, it will be apparent to those of ordinary skill in the art that other embodiments that depart from these details would still be understood to be within the scope of the appended claims. Moreover, for the purpose of clarity, detailed descriptions of well known devices, circuits, tools, techniques and methods are omitted so as not to obscure the description of the present system. It should be expressly understood that the drawings are included for illustrative purposes and do not represent the scope of the present system. In the accompanying drawings, like reference numbers in different drawings may designate similar elements.

For purposes of simplifying the description of the present system, some acts or steps of the present method may be attributed to an electronic device. It should be understood in fact that the said act or step is performed by an application program executed by the electronic device.

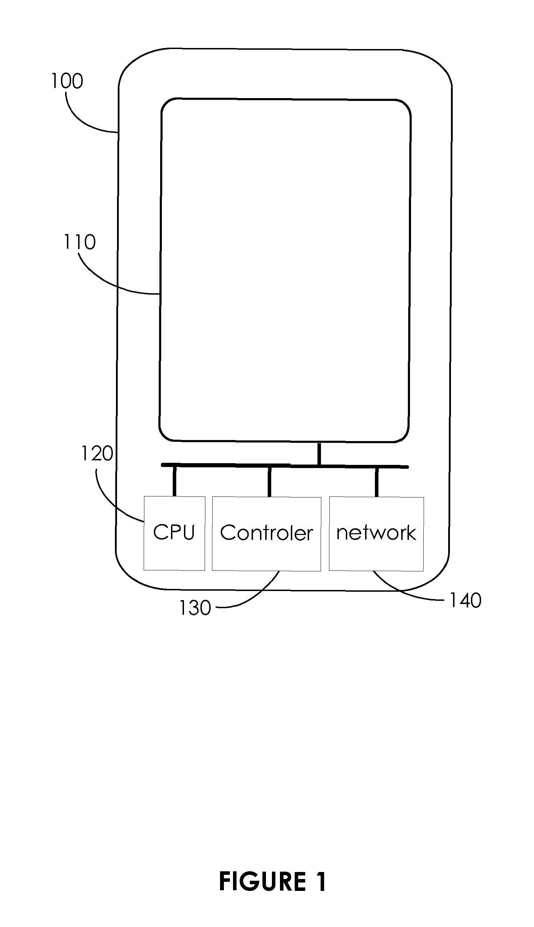

FIG. 1 is an illustration of an exemplary electronic device 100 used in the present system. In the here after description, the user or electronic device 100 will be illustrated as a tablet 100 with a touch interface. This illustration is in no way limiting as the present teaching would work for any user devices such as laptops computer, pads, desktops computer and the likes, enabling the user to interact through a touch interface, a pointing device such a mouse or touchpad and/or a keyboard. Another particularly relevant example could have been a computer device with a pointing device such a mouse. The electronic device 100 comprises a display device 110, a processor or a Central Processing Unit (CPU) 120, a controller 130 of the display device 110 and a network controller 140.

In the present system, the user interaction with and manipulation of the application program rendered on a Graphical User Interface (GUI) is achieved using the display device 110, or screen, which is presently a touch panel operationally coupled to the processor 120 controlling the displayed interface, possibly through the controller 130.

Processor 120 may control the rendering and/or the display of the GUI on the display device 110 depending on the type of application program, i.e. resident or web-based. Processor 120 may also handle the user entries or inputs according to the present method. The user entries to interact with an application program may be provided through interactions with the display device 110, thus hereafter called the touch panel 110.

The controller 130, e.g. a dedicated processor, may be provided to process input touches locally and reduce demand for the main processor 120 of the mobile device. The touch panel 110 can be based on sensing technologies including but not limited to capacitive sensing, resistive sensing, surface acoustic wave sensing, pressure sensing, optical sensing, and/or the likes. Here after, for simplification purpose, reference will be made to a finger of the user touching panel 110, other devices such as a stylus may be used in place of the user finger.

The touch panel 110 can be seen as an input device allowing interactions with a finger of a user or other devices such as a stylus. Touch sensor interface or touch panel 110 may include any suitable circuitry to convert analog signals corresponding to touch input received over its surface into any suitable digital touch input data. Such touch input data can, for example, be used to make selections of portions of the GUI of an application program or displace windows as explained here after. The input received from a user's touch is sent to the processor 120, possibly through the controller 130. The touch panel 110 is configured to detect and report the (location of the) touches to the processor 120, possibly through the controller 130, which can interpret the touches in accordance with the application program and the currently displayed GUI.

User inputs or the touches executed by the user can initiate a task, e.g. a control of the application program or the triggering some action on the interface. Indeed, with an electronic device such as a tablet 100, user inputs are mostly touches or gestures on the touch panel 110. A differentiation should be made between two common user inputs possible on a touch panel such as touch panel 110: tap gestures (or tap inputs) and touch gestures (or touch inputs). A touch gesture can be defined as a tap gesture with a longer duration of the user touch on the touch panel 100. Hereafter, a tap gesture should be considered as a user input where the user press the touch panel 110 with typically a finger, and after removes his finger (within a predefined duration Δt), whereas in a touch gesture, the user will maintain his finger pressed against the touch panel 110 (beyond that predefined duration Δt). Such differentiation between a tap gesture and a touch gesture may be comparable to what a user knows as left or right click when using a computer and a pointing device like a mouse. Commonly, with an application program such as for example a browser, a user using a computer desktop with a pointing device would perform a left click when a user using a touch panel would do a tap gesture to execute the same action. Similarly, a user using a computer desktop with a pointing device would perform a right click when a user using a touch panel would do a touch gesture to execute the same action.

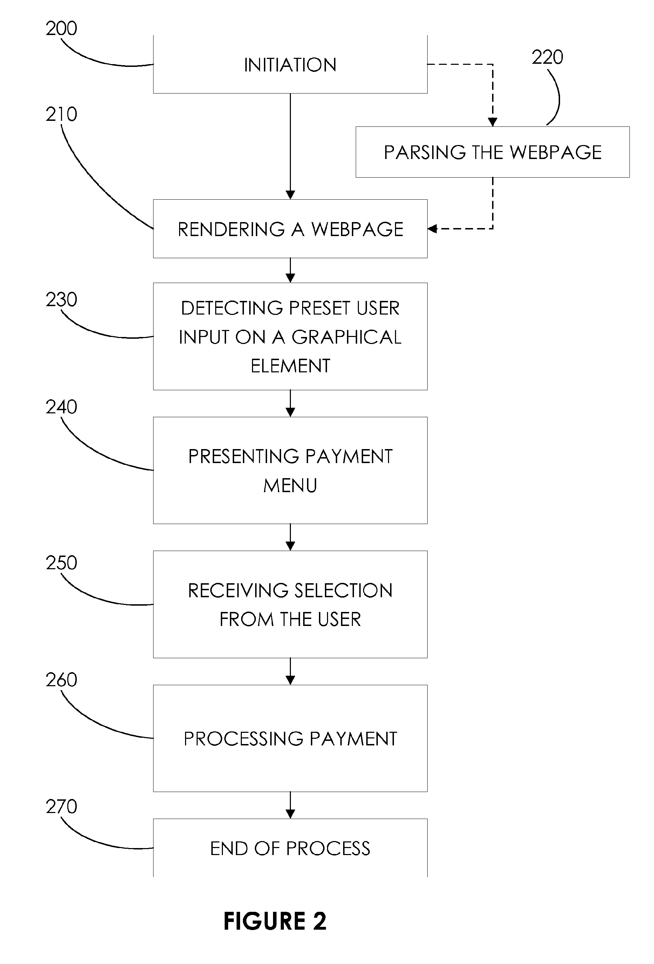

FIG. 2 shows an exemplary flowchart in accordance with an embodiment of the present method. The method could be here executed on an electronic device such as the tablet described in FIG. 1.

In a first initiation step 200, the user may launch an application program such as a browser and navigate to a merchant website as to search for some items for sale. In order to be able to browse the merchant website, if the website is implemented or encoded using some Rich Internet Application, e. g. Adobe™ Flash, the user may be invited to download and install one or more plug-ins. Depending on the browser used or on the context, a plug-in may also be called differently, for example module, extension or add-on. Depending on the browser, a plug-in may be already integrated in the browser or may need to be installed separately, i.e. downloaded and installed, by the user.

In another embodiment of present method, the user may need to download and install a specific plug-in used for implementing the present method. This specific plug-in can be downloaded from a centralized add-on webpage as provided for example by Firefox™ or Internet Explorer™. In this case, the plug-in will be referenced among others plug-in to be installed by the user. The specific plug-in should have been uploaded to the add-on webpage by the owner of the plug-in. Alternatively, the specific plug-in can be downloaded from a specific webpage, for example from a webpage of an operator. Moreover, said operator could provide some functionalities implemented with certain steps of the present method, particularly for the authentication of the user or the payment process.

As well, the user may need to configure its browser in a certain way as to benefit from the full features of a website, allowing for example Javascript™ in the preference settings of the browser.

The initiation step 200 comprises also a step related to the creation or management of some user payment information. The user may indeed provide, either directly by configuring a specific plug-in, or indirectly by completing a user profile for example on a dedicated website. This website may be operated by the provider - or owner as said before - of the plug-in, or may have agreement with the provider - or owner - of the plug-in as to transfer user information from the website, or an associated database operated by the same provider, to the plug-in. The plug-in may store locally the user information, or store remotely said information. The user may also directly complete a user profile containing user payment information on the visited merchant website. Initiation step 200 could consist in providing needed information as to complete user payment information, for example by completing a user profile. Initiation step 200 could also consist in providing information necessary to retrieve said information within a user profile, for example a login and a password.

By user payment information, it should be understood any information related to a user necessary to proceed to an electronic payment. Typically, such user payment information comprises the first and last names of the user, at least a user credit card information or any similar information. By similar information, it could be a Paypal™ account or for example an Orange Money™ account. In this last case, the user payment information may comprise a phone number associated to the user and his Orange Money account. User payment information may comprise other information such as delivery addresses, contact information, e-mail address, or any type of information in order to proceed to the purchase of an item or facilitate an act related to the purchase, like loyalty card reference, alternative delivery address, delivery preferences or preconfigured number of items to purchase for certain items for example.

Merchant websites do commonly store user payment information among possibly other information in an associated database, generally along with others information within a user profile associated to their customers. If the present method is implemented by such a merchant website, using Rich Internet Application for example, this user payment information may be used to proceed to the payment of an item according to the present method. When the present method is implemented using for example a specific plug-in, user payment information accessible to the specific plug-in may be unrelated to possible other set of user payment information known by the merchant website. Possibly, the user may not even have a user profile on said merchant website, relying on the specific plug-in to proceed to the purchase. In another embodiment, information such as a login and a password to access a given merchant website may be stored by the plug-in, allowing the plug-in to retrieve user payment information from said merchant website.

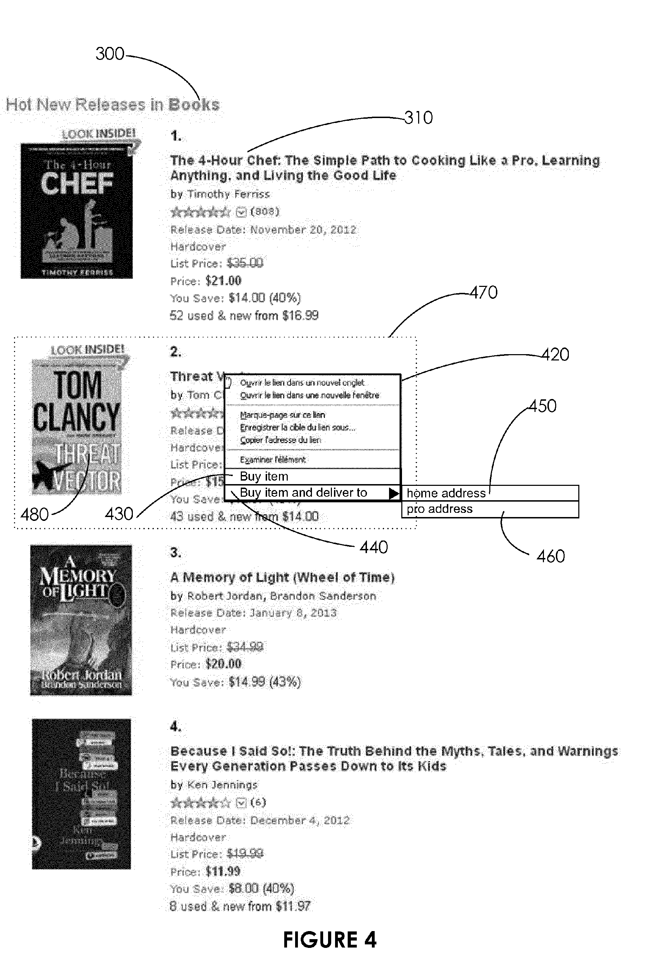

If preconditions as defined in previous description of step 200 are fulfilled, meaning that all required plug-ins are available, the browser may render in a step 210 the merchant webpage. The rendering of the webpage is performed by the browser only or possibly by the browser and one or more plug-ins. The webpage comprises one or more graphical elements, each graphical element representing an item for sale and being associated to a payment menu and a preset user input. Several graphical elements may be associated to a same item for sale, typically one or more image(s) or a short description of the item for sale. Possibly, by graphical element, it could also be understood a certain delimited zone around a graphical element such as an image of the item for sale. An example of such a graphical element as a zone is shown in 470 of FIG. 4.

In one embodiment of present method, the association of a graphical element and a payment menu may be encoded within the merchant webpage using a Rich Internet Application, like JavaScript or Java applet for example, as described previously. In another embodiment of present method, a plug-in could associate a graphical object to a payment menu. As described before, this plug-in can be a generic plug-in, like Adobe™ Flash enabling some functionalities later used to implement the present method, or it could be a specific plug-in implementing the present method. This embodiment will need a parsing step which is described in step 220 later.

Graphical object and payment menu are associated to a preset user input. Such preset user input may be advantageously a known user input as to facilitate the user experience. In the example of FIG. 1, a preset user input could be a touch gesture or input. With an electronic device using a pointing device such as a mouse, the preset user input could be a right click.

Step 220 is performed when the present method is implemented using a specific plug-in, especially if said plug-in is independent from the merchant website. In this case, there is a need to parse the webpage to retrieve graphical elements associated to items for sale and to associate a payment menu and a preset user input to the retrieved graphical elements. Method of parsing may be generic, automatically detecting within the source code of the webpage the code instructions related to a graphical object, but most probably, the parsing method should be adapted to a given merchant website. Indeed, each merchant website encodes the webpage differently and uses different coding options as to represent graphical objects. The parsing may for instance comprise the identification of a basket icon or graphical element to retrieve the graphical elements associated to items for sales. If the merchant webpage implements directly the present method, step 220 is not necessarily implemented.

In step 230, the electronic device, that is to say, an application program executed by the electronic device such as a browser or a browser with at least one plug-in, detects the preset user input on the one or more graphical element associated to an item for sale. In the case of an electronic device such as a tablet, a touch gesture may be the preset user input, or any other user gesture on the screen 110. The user gesture should allow an easy association with a graphical object representing or associated with an item for sale in order to improve the user experience. It could be for example a circling gesture on the touch screen 110 surrounding an image associated to the item for sale.

When detecting in step 230 a preset user input, the electronic device, that is to say, an application program executed by the electronic device such as a browser or a browser with at least one plug-in, presents the payment menu on the display, as shown with reference 420 of the illustration of FIG. 4. The payment menu can be a specially crafted menu dedicated for the present method. But, advantageously, in order to integrate present method smoothly with users' habits, the payment menu can be an adaptation of an existing menu. Also, said payment menu can be advantageously associated to the same preset user input of the existing menu. Thus, users' habits are not changed. Upon detection of said preset user input, a menu combining a menu usually associated to the preset user input and the payment menu will be presented. An illustration is given by 420 of FIG. 4 as described later.

In one advantageous embodiment of present method, the presentation of the payment menu is based on the user payment information. Indeed, if the user previously, during initiation step 200, stored or registered several delivery addresses within his user payment information, the menu can advantageously present different options to deliver the purchased item to one or the other addresses, as illustrated in FIG. 4, 440, 450 and 460. Alternatively, if the user registered different payment means such as credit cards one and two or an Orange Money accounts, the payment menu may propose choices such as "buy item with credit card one", "buy item with credit card two" or "buy item with Orange Money". In a further embodiment, the payment menu may also present displayed next to a payment option such as "buy item with credit card one" the balance of the bank account associated with the credit card one.

After step 240, in a further step 250, the application program implementing the present method receives a selection from the user on the payment menu. The selection of a choice among the payment menu is done using known techniques. By example, on an electronic device such as the tablet 100, the user may have to do a tap gesture on the touch panel 110 on the chosen option of the payment menu. If the present method is implemented on an electronic device such as a computer, the user may need to click (meaning here "left click") on the chosen option of the payment menu.

In a step 260, upon reception of the user selection on the payment menu, the electronic device may process the payment of the item associated to the graphical element based on the selection and using the user payment information. The application program executing the present method may retrieve data related to the item for sale represented by the graphical element that received the preset user input and then process the payment of the item using the retrieved data. Indeed, if the webpage does not contain sufficient data on the purchased item, it may be necessary to retrieve some complementary data on said item for sale. This is particularly true for one embodiment of present embodiment using a specific plug-in to parse the merchant webpage and retrieve data within the webpage source code. If some data on the item for sale are not retrieved this way, the payment process may not be feasible. The plug-in may then retrieve missing data from, for example the same merchant website by launching in the background a request for the missing data to the merchant website.

Alternatively, the plug-in may have access to a database, either locally or remotely, for example a database hosted by the same provider of the plug-in or by any other provider. Indeed, the plug-in may retrieve by parsing the webpage a reference to identify the item for sale but may not be able to retrieve the price of the item for sale. In this case, the plug-in may retrieve the missing data, here the price of the item, by connecting for example to the merchant website with a request containing the reference of the item for sale and asking to receive back the price of said item.

In one particular embodiment of present method, the plug-in may connect to a second merchant website to retrieve the missing data. In other words, the plug-in may connect to a second merchant website, different from the first website, using for example a reference of the item for sale retrieved on the first website. Possibly, in this embodiment, the item may even be purchased via the second website, even if the user was browsing the first website. In this case, the payment process is realized with the second website.

In a further embodiment of present method, the user may select an item for sale on a first webpage, for example a book merchant website, but the payment process and finally the transaction could be done with a second merchant website, for example an e-book merchant. In this case, a user may browse a first merchant website selling books while at the end buying an e-book format of the same book on a second merchant website.

In an embodiment of present method, where the present method is implemented by the merchant website by encoding the functionalities within the webpage, the payment process is similar but there usually no need to retrieve information elsewhere as the merchant website should have all needed information or data at disposal to process the payment.

Finally, when the payment processing is completed, in a step 270, the webpage or the plug-in may display for example a pop up window or a notification to inform the user that the transaction was completed, possibly confirming some information such as the price paid, the reference of the transaction or the estimated delivery date. The pop up windows or notification may also display an error message if the payment process failed.

More generally, some information may be displayed either directly within the webpage or in some notification zone of the application program, i.e. browser. The information displayed may advantageously be for example the name of the user or the balance of the credit card account or Orange Money account.

The present method may more generally be advantageously implemented for the purchase of immaterial goods. Indeed, in one scenario, a user may use the present method to purchase for example music, ringtone or any digital media. On a network connected electronic device such as a tablet with a network connection, a user with an Orange Money account may use the method to pay and receive directly on the tablet the purchased digital media.

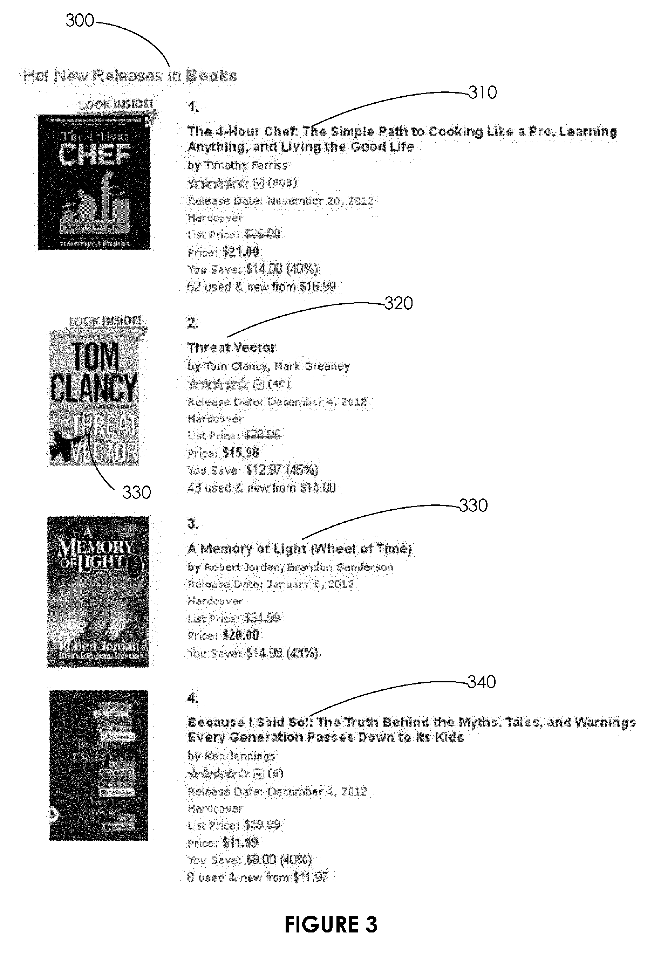

FIG. 3 and 4 show illustrations of an embodiment of the present system on an electronic device such as a desktop computer.

FIG. 3 is an illustration of a merchant webpage rendered on a touch screen 300. The webpage presents four items for sale; here four books, associated to the graphical objects 310, 320, 330 and 340. The webpage may be implemented, that is to say coded, using technology such as Rich Internet Application.

In FIG.4 the user performed a preset user input, a right click for example, on the graphical object 320. Upon detection of said user input, a menu 420 is displayed. As described before, in the illustrated embodiment of the present method, the menu 420 is a combination of a known menu classically associated to a right click input, plus some menu entries 430 and 440, 440 being an menu entry allowing to access a submenu with the entries 450 and 460.

From the situation as illustrated in FIG. 4, the user may click on the menu entry 430 to proceed to the purchase of the item 320. In this case, possibly, default options will be used to process the payment, such as a default postal address associated to the user. The user may also click on the entry 440 to open the submenu and show the entries 450 or 460. The user would be able to proceed to the payment, with a delivery in the first case (entry 450) at an address defined as "home address" or in the second case (entry 460) at an address defined as "pro address".

Possibly, in a next step not shown in the figures, a message may be displayed, either as a pop up or within a notification zone, informing on the status of the payment process.

Finally, the above discussion is intended to be merely illustrative of the present system and should not be construed as limiting the appended claims to any particular embodiment or group of embodiments. Thus, while the present system has been described with reference to exemplary embodiments, including user interfaces, it should also be appreciated that numerous modifications and alternative embodiments may be devised by those having ordinary skill in the art without departing from the broader and intended spirit and scope of the present system as set forth in the claims that follow.

The section headings included herein are intended to facilitate a review but are not intended to limit the scope of the present system. Accordingly, the specification and drawings are to be regarded in an illustrative manner and are not intended to limit the scope of the appended claims.

In interpreting the appended claims, it should be understood that:
a) the word "comprising" does not exclude the presence of other elements or acts than those listed in a given claim;
b) the word "a" or "an" preceding an element does not exclude the presence of a plurality of such elements ;
c) any reference signs in the claims do not limit their scope;
d) several "means" may be represented by the same item or hardware or software implemented structure or function;
e) any of the disclosed elements may be comprised of hardware portions (e.g., including discrete and integrated electronic circuitry), software portions (e.g., computer programming), and any combination thereof;
f) hardware portions may be comprised of one or both of analog and digital portions;
g) any of the disclosed devices or portions thereof may be combined together or separated into further portions unless specifically stated otherwise;
h) no specific sequence of acts or steps is intended to be required unless specifically indicated; and
i) the term "plurality of" an element includes two or more of the claimed element, and does not imply any particular range of number of elements; that is, a plurality of elements may be as few as two elements, and may include an immeasurable number of elements.

## Claims

1. A method to enable payment on a merchant website for a user, the user being associated to user payment information, the method being carried out by an electronic device and comprising:
- rendering a webpage comprising one or more graphical elements, each graphical element representing an item for sale and being associated to a payment menu and a preset user input,
- presenting the payment menu upon detecting the preset user input on the one or more graphical element associated to an item for sale,
- receiving selection from the user on the payment menu,
- processing payment of the item associated to the graphical element based on the selection and using the user payment information.

2. A method according to claim 1, the preset user input being a right click using a pointing device.

3. A method according to one of the previous claims, wherein the webpage uses a markup language for associating the payment menu and the preset user input to one or more graphical elements of said webpage.

4. A method according to one of the previous claims, wherein the webpage uses a web application for associating the payment menu and the preset user input to one or more graphical elements of said webpage.

5. A method according to previous claim 3 or 4, further comprising after the act of receiving selection an act of:
- retrieving data related to the item for sale represented by the graphical element that received the preset user input,
the act of processing the payment further comprising:
- processing payment of the item using the retrieved data.

6. A method according to one of the previous claims, wherein the act of presenting the payment menu further comprises:
- presenting the payment menu based on the user payment information.

7. A method according to one of the previous claims 1 and 2, further comprising a preliminary act of:
- parsing the webpage to retrieve graphical elements associated to items for sale,
- associating a payment menu and a preset user input to the retrieved graphical elements.

8. An electronic device with a user interface, the electronic device comprising a processor arranged to:
- render a webpage comprising one or more graphical elements, each graphical element representing an item for sale and being associated to a payment menu and a preset user input,
- present the payment menu upon detecting the preset user input on the one or more graphical element associated to an item for sale,
- receive selection from the user on the payment menu,
- process payment of the item associated to the graphical element based on the selection and using the user payment information.

9. A program product stored on a non-transitory computer-readable storage medium, and executable by a computer in the form of a software agent including at least one software module setup to implement the method according to claims 1 to 7.
